# EUROPEAN PATENT APPLICATION

(11) **EP 1 489 492 A1**
(43) Date of publication of application: **22.12.2004**
(21) Application number: 03291503.5
(22) Date of filing: 19.06.2003
(51) Int. Cl.: G06F 9/318, G06F 9/445

(54) **Two-step instruction resolution**

(71) Applicant: Texas Instruments Incorporated, Dallas, Texas 75251 (US); Texas Instruments France, 06271 Villeneuve Loubet Cedex, Nice (FR)
(72) Inventor: Chauvel, Gerard, 06600 Antibes (FR); Lasserre, Serge, 83600 Frejus (FR); D'Inverno, Dominique, 06270 Villeneuve-Loubet (FR); Kuusela, Maija, 06370 Mouans Sartoux (FR); Cabillic, Gilbert, 35530 Brece (FR); Lesot, Jean-Philippe, 35370 Estrelles (FR); Banatre, Michel, 35111 La Fresnais (FR); Routeau, Jean-Paul, 35235 Thorigne-Fouillard (FR); Majoul, Salam, 35000 Rennes (FR); Parain, Frederic, 35000 Rennes (FR)
(74) Representative: Holt, Michael

(57) **Abstract**

A preparation method comprises determining whether an instruction contains an unresolved reference and replacing an unresolved instruction with a predetermined instruction containing an operand associated with reference resolution code. A resolution execution method comprises receiving a plurality of instructions, at least one instruction of which comprises a replacement instruction that replaced a previous instruction, determining whether any of the received instructions comprise the replacement instruction, and executing resolution code to resolve a reference upon determining that a received instruction comprises the replacement instruction. The replacement instruction includes an operand that identifies the resolution code. A processor associated with these methods is also disclosed.

## Description

### BACKGROUND OF THE INVENTION

### TECHNICAL FIELD OF THE INVENTION

The present subject matter relates generally to processors and more particularly to machine instructions executed by processors.

### BACKGROUND INFORMATION

Many types of electronic devices are battery operated and thus preferably consume as little power as possible. An example is a cellular telephone. Further, it may be desirable to implement various types of multimedia functionality in an electronic device such as a cell phone. Examples of multimedia functionality may include, without limitation, games, audio decoders, digital cameras, etc. It is thus desirable to implement such functionality in an electronic device in a way that, all else being equal, is fast, consumes as little power as possible and requires as little memory as possible. Improvements in this area are desirable.

### BRIEF SUMMARY

In accordance with a preferred embodiment, a method comprises determining whether an instruction contains an unresolved reference and replacing an instruction having an unresolved reference with a predetermined instruction containing an operand associated with reference resolution code.

In other embodiments, a method comprises receiving a plurality of instructions, at least one instruction of which comprises a replacement instruction that replaced a previous instruction, determining whether any of the received instructions comprise the replacement instruction, and executing resolution code to resolve a reference upon determining that a received instruction comprises the replacement instruction. The replacement instruction preferably includes an operand that identifies the resolution code.

In yet other embodiments, a processor comprises decode logic and reference resolution execution logic. The decode logic preferably decodes a plurality of instructions and determines whether any of the instructions comprise a predetermined instruction. The predetermined instruction includes an operand associated with resolution code. Upon the decode logic determining that an instruction is the predetermined instruction, the reference resolution execution logic executes the resolution code to resolve a memory reference.

### NOTATION AND NOMENCLATURE

Certain terms are used throughout the following description and claims to refer to particular system components. As one skilled in the art will appreciate, semiconductor companies may refer to a component by different names. This document does not intend to distinguish between components that differ in name but not function. In the following discussion and in the claims, the terms "including" and "comprising" are used in an open-ended fashion, and thus should be interpreted to mean "including, but not limited to...''. Also, the term "couple" or "couples" is intended to mean either an indirect or direct connection. Thus, if a first device couples to a second device, that connection may be through a direct connection, or through an indirect connection via other devices and connections.

### BRIEF DESCRIPTION OF THE DRAWINGS

For a more detailed description of the preferred embodiments of the present invention, reference will now be made to the accompanying drawings, wherein:
Figure 1 shows a diagram of a system in accordance with preferred embodiments of the invention and including a Java Stack Machine ("JSM") and a Main Processor Unit ("MPU");
Figure 2 depicts a block diagram associated with a preparation stage for machine instruction resolution in accordance with a preferred embodiment of the invention;
Figure 3 depicts a block diagram associated with an execution stage for machine instruction resolution in accordance with a preferred embodiment of the invention; and
Figure 4 depicts a block diagram associated with an execution stage for machine instruction resolution in accordance with a preferred embodiment of the invention and including a translation table.

### DETAILED DESCRIPTION OF THE PREFERRED EMBODIMENTS

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

The subject matter disclosed herein is directed to a programmable electronic device such as a processor having memory in which computer programs associated with a stack-based language (e.g., Java) may be stored. The computer programs may be executed through a "virtual" machine that may be implemented in hardware, software or both hardware and software. The virtual machine may transform the computer program into machine code (e.g., Java Bytecodes) that may be executed by a processor.

Java Bytecodes comprise fundamental computer operations, referred to as "instructions." Each instruction may include two fields: an operation code ("opcode") and one or more operands. Opcodes may identify the fundamental computer operation requested by the instruction to the virtual machine. For example, the operation "IINC" (integer increment) may be represented by the opcode "132". When a virtual machine decodes a Java Bytecode containing opcode "132", the integer increment operation is performed upon the operands associated with the instruction.

Each operand may be of two distinct types: "concrete" or "symbolic". Concrete operands that directly contain physical components (e.g., a constant value) may be referred to as "concrete direct" operands. Concrete operands that contain a reference to a physical components may be referred to "concrete indirect" operands. Concrete indirect operands may comprise pointers and offsets to memory locations where the physical component being referenced may reside. A machine (e.g., processor, virtual machine) may execute an instruction with concrete operands immediately after the instruction is decoded.

Unlike concrete operands, symbolic operands may reference components through an indirect, virtual location of the component being referenced. Symbolic references may be used to access components of computer programs, some of which may not already be loaded into memory. Without a target component being loaded into memory, a concrete reference to that component (e.g., its physical address) will not yet be available. A method signature, represented in symbolic form, is an example of a symbolic reference. In order to execute an instruction with a symbolic reference, a machine must locate and, if necessary, load into memory the symbolically referenced component. Once the component is loaded into memory, the symbolic reference may be replaced with a concrete operand and the instruction then may be executed. The process of replacing a symbolic reference with a concrete operand may be referred to herein as "reference resolution." All operations with symbolic operands, referred to as "unresolved" instructions, may require reference resolution before execution.

The following describes the operation of a preferred embodiment of a system in which computer programs may carry out reference resolution before execution on a machine. Although this disclosure and the claims that follow are not limited to any particular type of system and machine, the preferred embodiments of a system and processor are disclosed below. Details regarding the use of the virtual machine follow the description of the processor.

The processor described herein is particularly suited for executing Java Bytecodes, or comparable code. As is well known, Java is particularly suited for embedded applications. Java is a relatively "dense" language meaning that on average each instruction may perform a large number of functions compared to various other programming languages. The dense nature of Java is of particular benefit for portable, battery-operated devices that preferably include as little memory as possible to save space and power. The reason, however, for executing Java code is not material to this disclosure or the claims that follow.

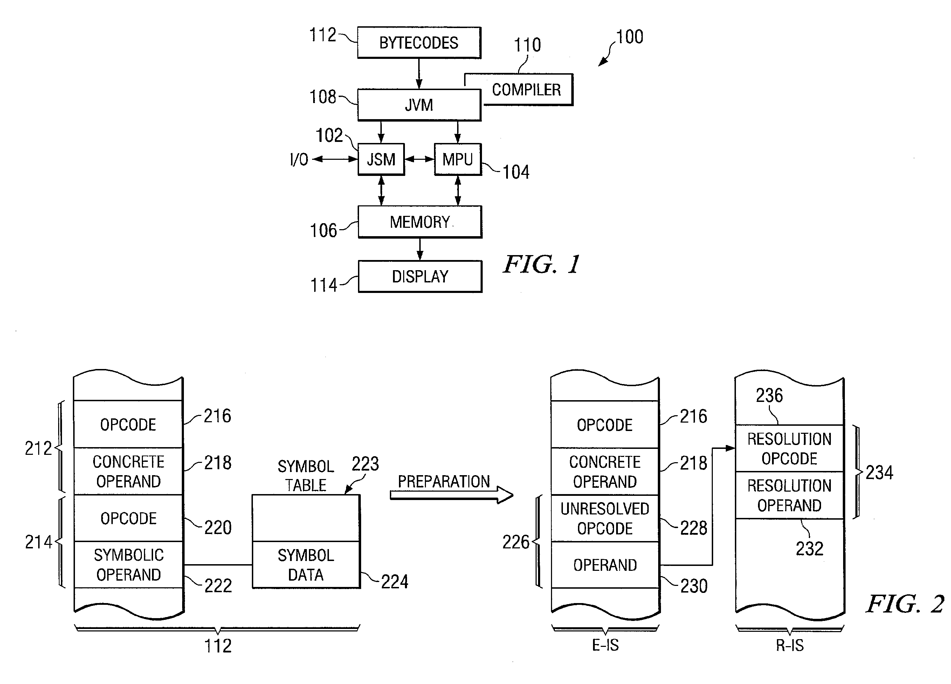

Referring now to Figure 1, a system 100 is shown in accordance with a preferred embodiment of the invention. As shown, the system includes at least two processors 102 and 104. Processor 102 is referred to for purposes of this disclosure as a Java Stack Machine ("JSM") and processor 104 may be referred to as a Main Processor Unit ("MPU"). System 100 may also include memory 106 coupled to both the JSM 102 and MPU 104 and thus accessible by both processors. At least a portion of the memory 106 may be shared by both processors meaning that both processors may access the same shared memory locations. Further, if desired, a portion of the memory 106 may be designated as private to one processor or the other. System 100 also includes a Java Virtual Machine ("JVM") 108, compiler 110, and a display 114. The JSM 102 preferably includes an interface to one or more input/output ("I/O") devices such as a keypad to permit a user to control various aspects of the system 100. In addition, data streams may be received from the I/O space into the JSM 102 to be processed by the JSM 102. Other components (not specifically shown) may be included as desired. While system 100 may be representative of, or adapted to, a wide variety of electronic systems, an exemplary embodiment comprises a battery-operated, communication device such as a mobile cell phone.

Referring still to Figure 1, as is generally well known, Java code comprises a plurality of "Bytecodes" 112. Bytecodes 112 may be provided to the JVM 108, compiled by compiler 110 and provided to the JSM 102 and/or MPU 104 for execution therein. In accordance with a preferred embodiment of the invention, the JSM 102 may execute at least some, and generally most, of the Java Bytecodes. When appropriate, however, the JSM 102 may request the MPU 104 to execute one or more Java Bytecodes not executed or executable by the JSM 102. In addition to executing Java Bytecodes, the MPU 104 also may execute non-Java instructions. The MPU 104 also hosts an operating system ("O/S") (not specifically shown), which performs various functions including system memory management, the system task management that schedules the JVM 108 and most or all other native tasks running on the system, management of the display 114, receiving input from input devices, etc. Without limitation, Java code may be used to perform any one of a variety of applications including multimedia, games or web based applications in the system 100, while non-Java code, which may comprise the O/S and other native applications, may still run on the system on the MPU 104.

The JVM 108 generally comprises a combination of software and hardware. The software may include the compiler 110 and the hardware may include the JSM 102. The JVM may include a class loader, bytecode verifier, garbage collector, and a bytecode interpreter loop to interpret the bytecodes that are not executed on the JSM processor 102.

In accordance with preferred embodiments of the invention, JVM 108 may use two instruction sets to implement the reference resolution techniques described herein. One instruction set may be referred to as an execution instruction set ("E-IS") and the other instruction may be referred to as a resolution instruction set ("R-IS"). The R-IS may comprise instructions designed for JVM 108 to efficiently carry out reference resolution through the replacement of symbolic references with concrete operands and the use of standard Java bytecodes and additional bytecodes as deemed desirable by the system designer. The additional bytecodes may represent machine instructions devised for the purposes of reference resolution on the system implementing the disclosed method. A currently unresolved instruction may use an instruction from the R-IS for reference resolution. Further, the operand of an instruction in the R-IS may contain the symbolic reference associated with the operand of the unresolved instruction.

The E-IS may comprise standard Java Bytecodes as well as an instruction referred to as an "unresolved identifier instruction." The unresolved identifier instruction may be associated with instructions in Java bytecodes that contain symbolic references and may comprise an opcode and an operand. The opcode of the unresolved identifier instruction preferably includes an opcode that is not utilized in standard Java Bytecodes and generally identifies the instruction as the unresolved identifier instruction. The operand may contain the location in the R-IS code that holds a reference resolution instruction for the unresolved instruction, as explained below.

In accordance with preferred embodiments, Java bytecodes are generally passed through two stages. These two stages include the preparation stage and the reference resolution execution stage. These two stages may occur at various times during the execution process and by various functional units within system 100 (e.g., the JSM 102). The two stages may occur preferably at any time before actual execution of the instruction by the JSM 102 and/or the MPU 104. Accordingly, the two instruction sets may be implemented in various components or distributed across the various components of the relevant system.

Referring now to Figure 2, an exemplary preparation stage is illustrated. In the example of Figure 2, bytecodes 112 (located on the left side of Figure 2) contain two instructions 212 and 214. Instruction 212 may comprise opcode 216 and concrete operand 218, which does not need reference resolution. Instruction 214 may comprise opcode 220 and symbolic operand 222, which does need reference resolution. Symbolic operand 222 may include or point to symbolic data 224 contained in a symbol table 223. During the preparation stage, bytecodes 112 may be converted to the E-IS. More specifically, the preparation stage includes identifying all instructions that contain symbolic references and replacing such instructions with the unresolved identifier instruction introduced above. Accordingly and as illustrated in Figure 2, instruction 214 with symbolic operand 222 may be replaced by unresolved identifier instruction 226 which includes an "unresolved" identifier instruction opcode 228 and an associated operand 230. The unresolved identifier instruction operand 230 preferably points to a resolution instruction 234 in the R-IS code. The resolution instruction 234 preferably includes a resolution opcode 236. The resolution instruction operand 232 initially may comprise symbol data 224 associated with instruction 214.

Instruction 212, which does not require reference resolution, may be converted to the E-IS without modification during the preparation stage. Although two instructions were shown to facilitate discussion, the preparation stage may prepare any number of bytecodes and bytecodes of various sizes depending upon the system implementation.

The preparation stage illustrated in Figure 2 may be implemented in a system such as a processor comprising decode coupled to replacement logic. The decode logic and replacement logic preferably work together to identify the instructions that contain symbolic references (preferably the decode logic) and replace such instructions with the unresolved identifier (preferably the replacement logic) instruction and produce the resolution code as discussed above. The system that performs the preparation stage may comprise a processor such as the JSM. The system may also include any or all of the components mentioned below that perform the reference resolution stage.

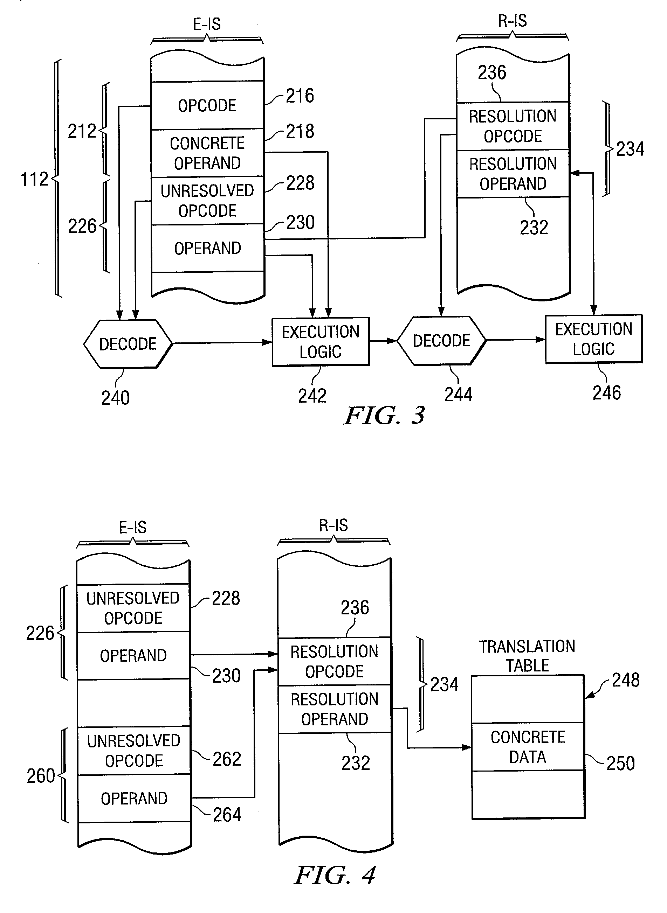

Figure 3 illustrates an exemplary reference resolution execution stage in accordance with preferred embodiments of the invention. In this stage, all unresolved references are resolved through the execution of reference resolution code. The left side of Figure 3 shows bytecodes 112 as prepared above into E-IS. The execution stage may begin any time after the preparation stage ends by first decoding bytecodes 112. In the example of Figure 3, opcode 216 is decoded with decode logic 240. Decode logic 240 may be implemented in the JVM 108 and/or JSM 102. Operand 218 then is passed to the execution logic 242 where the instruction may be executed. Like the decode logic 240, the execution logic 242 may be implemented in the JVM 108 and/or JSM 102.

During or after execution of instruction 212, unresolved identifier instruction opcode 228 is provided to decode logic 240. Decode logic 240 identifies the instruction as the unresolved identifier instruction and causes the associated operand 230, which contains the location of resolution instruction 234, to be provided to execution logic 242. In response, execution logic 242 preferably provides the unresolved operand 230 to decode logic 244. Decode logic 244 then may retrieve resolution instruction 234 and identify execution logic 246 as execution logic capable of resolving operand 232. The resolution instruction 234 preferably is executed to resolve the symbolic reference by determining a corresponding concrete operand. Resolution operand 232 may then be provided to resolution execution logic 246 which executes resolution instruction 234. The execution of resolution instruction 234 results in a concrete operand being provided or otherwise obtained for the object referenced by resolution operand 232. The unresolved opcode 228 then may either be rewritten either to the original opcode 220 (Figure 2) before the preparation stage or to any other opcode in E-IS. The concrete operand may replace unresolved operand 222, thereby resolving the instruction 226. Either execution logic 242 or execution logic 244 may now execute the resolved instruction 226.

In accordance with preferred embodiments of the invention, the exemplary execution stage may also reuse a previously determined concrete operand for future reference resolutions. For example, figure 4 shows unresolved instructions 226 and 260 that utilize resolution instruction 234. During the resolution of instruction 226 by resolution instruction 234, a concrete operand is determined. This concrete operand is stored in resolution operand 232 or in entry 250 of translation table 248. Since resolution instruction 234 may now contain concrete operand 232 or have concrete data available in translation table 248, resolution instruction 234 may be consider resolved. During the resolution of instruction 260 by now resolved resolution instruction 234, resolved resolution instruction 234 need not be executed. Instead, instruction 260 may be rewritten with previously resolved instruction 226.

Numerous variations and modifications will become apparent to those skilled in the art once the above disclosure is fully appreciated. For example, JSM 102 may perform one or more of the reference resolution techniques described above. It is intended that the following claims be interpreted to embrace all such variations and modifications.

## Claims

1. A system, comprising:
decode logic;
replacement logic coupled to the decode logic; and
reference resolution execution logic;
wherein the decode logic and replacement logic function together to determine whether an instruction contains an unresolved reference and to replace an instruction having an unresolved reference with a predetermined instruction containing an operand associated with reference resolution code; and
wherein the decode logic decodes a plurality of instructions and determines whether any of the instructions comprise the predetermined instruction and, upon the decode logic determining that an instruction is the predetermined instruction, the reference resolution execution logic executes the resolution code to resolve a memory reference.

2. The system of claim 1 wherein replacement logic replaces all instructions that have unresolved references with the predetermined instruction containing an operand associated with reference resolution code.

3. The system of claim 1 wherein the predetermined instruction's operand comprises a memory location that contains reference resolution code.

4. The system of claim 1 wherein the predetermined instruction is replaced by a resolved instruction.

5. The system of claim 1 wherein the reference resolution execution logic stores a reference resolution in a translation table or directly in the replacement instruction's operand for subsequent use in resolving memory references.

6. The system of claim 1 wherein the decode logic, replacement logic, and reference resolution execution logic are implemented in a virtual machine.

7. The system of claim 1 including a processor core wherein the decode logic and replacement logic are implemented in said core.

8. A method, comprising:
determining whether an instruction contains an unresolved reference;
replacing an instruction having an unresolved reference with a predetermined instruction containing an operand associated with reference resolution code;
receiving a plurality of instructions, at least one instruction of which comprises a replacement instruction that replaced a previous instruction;
determining whether a received instruction comprises the replacement instruction; and
executing resolution code to resolve a reference upon determining that a received instruction comprises the replacement instruction.

9. The method of claim 8 further including replacing all instructions that have unresolved references with the predetermined instruction containing an operand associated with reference resolution code.

10. The method of claim 8 wherein the predetermined instruction's operand comprises a memory location that contains reference resolution code.

11. The method of claim 8 wherein after executing the resolution code to resolve the reference, replacing the replacement instruction with a fully resolved instruction.

12. The method of claim 8 wherein, after executing the resolution code to resolve the reference, storing the resolved reference in a translation table or recursively in replacement instructions' operands for subsequent reference resolutions.
